# EUROPÄISCHE PATENTSCHRIFT

(11) **EP 3 562 647 B1**
(45) Veröffentlichungstag und Bekanntmachung des Hinweises auf die Patenterteilung: **23.06.2021**
(21) Anmeldenummer: 18705071.1
(22) Anmeldetag: 02.01.2018
(51) Int. Cl.: B29C 48/25, B29C 48/691

(54) **SIEBRAD-FILTRIERVORRICHTUNG FÜR MITTEL- BIS HOCHVISKOSE FLUIDE UND ABDICHT- UND MONTAGEVERFAHREN DAFÜR**
ROTARY SCREEN FILTERING DEVICE FOR MEDIUM TO HIGH-VISCOSITY FLUIDS AND SEALING AND MOUNTING METHOD THEREFOR
DISPOSITIF DE FILTRATION À TAMIS ROTATIF POUR FLUIDES MOYENNEMENT À HAUTEMENT VISQUEUX ET PROCÉDÉ D'ÉTANCHÉIFICATION ET DE MONTAGE CORRESPONDANT

(30) Priorität: 02.01.2017 DE 102017100032
(43) Veröffentlichungstag der Anmeldung: 06.11.2019
(60) Teilanmeldung: 21164850.6
(73) Patentinhaber: Gneuss GmbH, 32549 Bad Oeynhausen (DE)
(72) Erfinder: GNEUSS, Daniel, Charlotte 28277 (US); GNEUSS, Detlef, 6919 Carabietta (CH); GNEUSS, Stephan, 32547 Bad Oeynhausen (DE)
(74) Vertreter: Tarvenkorn, Oliver
(86) Internationale Anmeldenummer: PCT/DE2018/100000
(87) Internationale Veröffentlichungsnummer: WO 2018/121817

(56) Entgegenhaltungen:
- WO-A1-2005/056273
- DE-U1- 29 908 735

## Beschreibung

Die Erfindung betrifft eine Siebrad-Filtriervorrichtung für mittel- bis hochviskose Fluide mit den Merkmalen des Oberbegriffs des Anspruchs 1 sowie ein Abdicht- und Montageverfahren dafür.

Bei der Filterung von mittel- bis hochviskosen Fluiden, wobei es sich insbesondere um Kunststoffschmelzen handelt, müssen Agglomerate oder Feststoffpartikel ausgefiltert werden, bevor die Schmelze einer weiterverarbeitenden Anlage wie einer Extrusionseinrichtung zugeführt werden kann. Um eine unterbrechungsfreie Filtrierung zu ermöglichen, sind verschiedene Bauarten von Filtriervorrichtungen bekannt, die den Austausch eines Filtersiebs im laufenden Betrieb erlauben, indem ein neues, nicht verunreinigtes Sieb in den Fließkanal gebracht und das verunreinigte daraus entfernt wird. Eine besondere Schwierigkeit bei der Filtration von Kunststoffschmelzen besteht darin, dass diese bei hohen Temperaturen und bei hohen Drücken erfolgen muss.

Eine gattungsgemäße Filtriervorrichtung ist jeweils grundlegend aus der DE 3302343 A1 oder der DE 3341508 A1 bekannt. Auch die DE 10 2010 036 810 A1 und die DE 299 08 735 U1 zeigen eine solche Siebrad-Filtriervorrichtung. Die besonderen Vorteile einer solchen Filtriervorrichtung liegen darin, dass auf dem Siebrad eine Vielzahl von Einzelsieben platziert werden kann, welche sukzessive durchströmt werden und an der jeweiligen vom Fließkanal abgewandten Seite zu Reinigungszwecken leicht zugänglich sind oder ausgetauscht werden können. Durch die fortwährende Rotation gelangen immer gereinigte Siebstellen in den Produktionsfluss, während verunreinigte Siebe aus dem Schmelzestrom heraus bewegt werden, um ausgetauscht oder gereinigt zu werden. Auch der konstruktive Aufbau der Filtriervorrichtung und deren Fertigung sind aufgrund des schichtweisen Aufbaus des Gehäuses durch plattenförmige Elemente einfach und kostengünstig.

Wichtig und zugleich schwierig zu beherrschen bei einer solchen Filtriervorrichtung ist die Abdichtung zwischen dem Siebrad und den äußeren Gehäuseplatten einschließlich der Zwischenplatten, die zwischen den äußeren Gehäuseplatten eingefügt sind und das Siebrad zumindest über einen wesentlichen Teil von dessen Umfang umschließen.

Bei einer gattungsgemäßen Filtriervorrichtung, die in WO 2005/056 273 A1 beschrieben ist, ist angegeben, dass das Paket von äußeren Gehäuseplatten und den dazwischenliegenden Zwischenplatten so vorgespannt werden muss, dass der Innendruck des Fluids während des Betriebs keine zu starke Aufweitung des Gehäuses bewirkt und Leckagestellen vermieden werden, da ansonsten zuviel Fluid austritt, was zu Verschmutzungen und Störungen wie auch allgemein zu einem vermeidbaren Verlust an Rohstoffen führt. Andererseits muss eine ausreichende Beweglichkeit des Siebrades gegeben sein, da es sonst nicht mehr drehbar ist. Es muss also stets eine bestimmte Mindest-Schmierspaltweite zwischen den stirnseitigen Dichtungsflächen am Siebrad und den gegenüberliegenden Anlageflächen an den Ein- und Auslaufplatten gegeben sein. Eine ausreichende Schmierspaltbreite ist erforderlich, damit ein sehr geringfügiger Austritt des Fluids über die Dichtungsstege hinweg möglich ist, sodass durch das Fluid selbst eine Art Schmierfilm an beiden Stirnseiten des Siebrads ausgebildet wird.

Die erforderliche Schmierspaltweite hängt zum einen fertigungsbedingt von dem Verhältnis der Höhenunterschiede von Siebrad und Zwischenelementen, welche die sog. Innenpaarung bilden, ab. Neben diesem konstanten Faktor gibt es verschiedene Einflüsse, die sich im Betrieb dynamisch ändern. Hierzu gehören die Viskosität des zu verarbeitenden Fluids, der zu erreichende Volumenstrom, der Fließdruck im Bereich der Siebstelle und die Verarbeitungstemperatur.

Eine entsprechende Anpassung der Höhe des Siebrads und der Höhe der ebenfalls zwischen den Ein- und Auslaufplatten positionierten Zwischenelemente, welche das Siebrad zumindest teilweise umschließen, ermöglicht die Einstellungen einer bestimmten Spaltbreite, die jedoch im Bereich von wenigen Mikrometern liegt, sodass die Fertigung der Zwischenelemente und des zugehörigen Siebrads, welche zusammen die Innenpaarung bilden, sehr schwierig ist.

Es hat sich in der Praxis gezeigt, dass zum einen eine sehr sorgfältige Berechnung und Fertigung der Innenpaarung erforderlich ist, z. B. durch Feinschleifen oder Läppen, die entsprechend hohen Bearbeitungsaufwand nach sich zieht, und dass zum anderen selbst bei hochgenauer Fertigung die Spaltweite nur an einem bestimmten Betriebspunkt und für ein spezifisches Fluid optimal eingestellt ist. Wird die Filtriervorrichtung für ein anderes Fluid und/oder mit Änderungen bei den sonstigen Verfahrensparametern betrieben, so zieht dies zwangsläufig Änderungen der Spaltweiten und dadurch Probleme hinsichtlich der Beweglichkeit des Siebrads oder der Dichtigkeit nach sich.

Die Änderung der Betriebstemperatur kann zudem zu Änderungen infolge der lokal unterschiedlichen Wärmedehnung führen, auch wenn alle zu der Filtriervorrichtung kombinierten Elemente einheitlich aus Stahl bestehen.

Durch den Betriebsdruck weitet sich die Filtriervorrichtung von innen auf. Dem wirkt wiederum die jeweilige Vorspannung in den Verschraubungen entgegen, mit der die Platten aneinandergepresst und damit auch komprimiert werden. Mit höherer Vorspannung besteht die Gefahr, dass das Siebrad klemmt, weil kein ausreichender Schmierspalt am Übergang zum stationären Teil des Gehäuses mehr besteht. Sinkt die Vorspannung allerdings, so kann es zu größeren Leckströmungen kommen, und zwar insbesondere, wenn niedrig-viskose Fluide verarbeitet werden.

Die temperatur- und druckbedingten Einflüsse sind im Wesentlichen für einen einzigen Betriebspunkt und für ein bestimmtes Fluid kalkulierbar, so dass die Nennwerte der jeweiligen Höhen berechnet werden können. Jedoch führt jeder Fertigungsvorgang für sich zu geometrischen Toleranzen hinsichtlich der Höhe der Elemente. Innerhalb der miteinander gekoppelten Toleranzfelder können sich ungünstige Paarungen bilden. Bei einfachen und kostengünstig durchführbaren Bearbeitungsverfahren wie Fräsen können sich die fertigungsbedingten Toleranzen auf Werte addieren, die der erforderlichen Nenn-Spaltweite in der Filtriervorrichtung nahekommen oder diese sogar übertreffen.

Z. B. führt eine maximal große Höhe des Zwischenelements bei gleichzeitig minimaler Höhe des Siebrads zu einer zu großen Spaltweite und somit ggf. zu großen Leckageströmungen. Umgekehrt führt eine minimale Höhe des Zwischenelements bei gleichzeitig maximaler Höhe des Siebrads zu einer zu kleinen Spaltweite, zu geringer Schmierwirkung und somit ggf. zum Klemmen des Siebrads im Betrieb.

Die Aufgabe der vorliegenden Erfindung liegt somit daran, eine Filtriervorrichtung so zu verbessern, dass eine kostengünstige Fertigung wie auch eine spätere kostengünstige Anpassung der Filtriervorrichtungen für die Verwendung mit anderen Fluiden und/oder anderen Betriebsparametern möglich ist.

Erfindungsgemäß wird diese Aufgabe durch eine Filtriervorrichtung mit den Merkmalen des Anspruchs 1 und ein Abdicht- und Montageverfahren mit den Merkmalen des Anpruchs 6 gelöst.

Der Begriff "Höhe" wird im Folgenden verwendet, um die axiale Ausdehnung der Elemente der Innenpaarung innerhalb der Filtriervorrichtung zu kennzeichnen bzw. die vertikale Ausdehnung zu charakterisieren, wenn das Siebrad und die Zwischenplatten auf einem Werkzeugbett oder einem Messtisch liegend bearbeitet bzw. gemessen werden. Sie könnte auch als "Dicke" oder "Schichtstärke" bezeichnet werden. In der Seitenansicht auf eine der Schmalseiten der Filtriervorrichtung erscheint die "Höhe" eher als "Breite".

Erfindungsgemäß wird also vorzugsweise gar nicht erst versucht, die gewünschte Spaltweite durch höchstgenaue und entsprechend kostenintensive Fertigung der Innenpaarung, bestehend aus Zwischenelement(en) und Siebrad, herzustellen. Vielmehr werden die Höhen aller Elemente der Innenpaarung vorzugsweise in einem Arbeitsgang und in derselben Aufspannung gefertigt. Damit spielen die absoluten Istwerte der Höhe keine Rolle mehr, da es keine fertigungsbedingten Höhendifferenzen innerhalb der Innenpaarung mehr gibt. Selbst wenn die konstruktiv vorgegebene Höhe bei der Fertigung grob verfehlt wird, zieht dies nach der Erfindung keinerlei Nachteile für die Dichtigkeit der Filtriervorrichtung nach sich.

Möglichst ist es erfindungsgemäß auch, gebrauchte Filtriervorrichtungen aufzubereiten, indem man die Innenpaarung, also das Siebrad und die Zwischenplatten, zusammen nivelliert, beispielsweise durch Flächenschleifen. Auch der Materialabtrag durch Verschleiß und nachträgliches Überschleifen bei einer gebrauchten Filtriervorrichtung zieht keinen Nachteil nach sich, da innerhalb des mehrteiligen Satzes, der die Innenpaarung bildet, nur Teile mit exakt derselben Höhe erhalten werden.

Die notwendige Spaltweite in der Filtriervorrichtung, die in der Regel im Bereich zwischen 5 µm und 50 µm liegt, wird erfindungsgemäß also nicht durch eine getrennte Fertigung von Siebrad und Zwischenelementen, sondern vielmehr durch eine individuelle Spaltanpassungsschicht erreicht.

Die Spaltanpassungsschicht wird vorzugsweise in Form von Elementen geschaffen, die bei der Montage in wenigstens einer der beiden Trennebenen, die zwischen der Zwischenplatte und der Einlaufplatte oder zwischen der Zwischenplatte und der Auslaufplatte bestehen, eingefügt werden. Damit wird die Fertigung der Innenpaarung für den vorgesehenen Einsatzzweck der Filtriervorrichtung wesentlich erleichtert, und zudem wird eine eventuelle Anpassung an Änderungen im Filtrierprozess erleichtert oder sogar erst ermöglicht.

Die Zwischenplatte wird durch die Spaltanpassungsschicht so ergänzt, dass sie zusammen mit der Spaltanpassungsschicht eine solche Distanz zwischen der Ein- und Auslaufplatte herstellt - und zwar im Einbauzustand unter Vorspannung - dass das dazwischen positionierte Siebrad frei drehen kann und dass beidseitig ein Schmierspalt zwischen Siebrad und den Gehäuseplatteninnenflächen besteht. Die erforderliche Höhe des Schmierspalts wird unter Berücksichtigung des Betriebsdrucks und der Viskosität des Fluids festgelegt.

Im Normalfall werden die Zwischenplatte oder die Gruppe von Zwischenplatten mit einer Höhe gefertigt, die ein Untermaß zum Nennmaß der gewünschten Distanz zwischen Ein- und Auslaufplatte darstellt. Eine geeignete Spaltanpassungsschicht wird bei der Montage eingefügt. Die Spaltanpassungsschicht besitzt im Ausgangszustand vor der Montage eine Höhe, die folgende Einflüsse berücksichtigt:
- die gewünschte Nennspaltweite auf beiden Seiten des Siebrads in Abhängigkeit von Betriebsdruck und/oder Viskosität;
- einen Kompressionsausgleich für die Kompression in den Gehäuse- und Zwischenplatten infolge der für den jeweiligen Betriebsdruck notwendigen Vorspannung;
- einen Ausgleich für die beim Aufbringen der Vorspannung einsetzende Setzung der Oberflächen, in Abhängigkeit von der jeweiligen Oberflächenrauheit;
- das Toleranzfeld bei den Elementen der Spaltanpassungsschicht selbst;
- ggf. Temperatureinflüsse aufgrund unterschiedlichen Wärmedehnungsverhaltens in den Platten.

Die Spaltanpassungsschicht kann durch plattenfömige Elemente oder durch Band- oder Folienabschnitte gebildet sein.

Schichtelemente zur Bildung der Spaltanpassungsschicht können individuell gefertigt werden, bei denen die tatsächliche Ist-Höhe anschließend messtechnisch ermittelt wird. Es kann dann ein geeignetes Element aus einer Mehrzahl von Elementen ausgewählt werden, so dass sich in Kombination mit dem Zwischenelement das gewünschte Maß einstellt.

Besonders bevorzugt wird die Spaltanpassungsschicht durch wenigstens einen Abschnitt einer gewalzten Metallfolie, insbesondere kaltgewalzten Stahlfolie, gebildet. Diese ist z. B. in Form von Metallbändern kostengünstig und sehr maßhaltig erhältlich.

Die Nennstärke der Spaltanpassungsschicht wird vorzugsweise etwas größer als rechnerisch notwendig festgelegt. Durch eine Erhöhung der Vorspannung kann die Spaltweite dann ggf. nachträglich reduziert werden, während die umgekehrte Vorgehensweise - Festlegung einer kleineren Nennstärke der Spaltanpassungsschicht und Spaltweitenadaption durch Reduzierung der Vorspannung - möglicherweise zu Leckageströmungen führen kann.

Dadurch, dass erfindungsgemäß die spanend zu bearbeitenden Oberflächen der Innenpaarung in derselben Aufspannung gefertigt werden und jegliche fertigungsbedingten Toleranzeinflüsse innerhalb der Gruppe der Elemente der Innenpaarung eliminiert werden, kann durch Verwendung kaltgewalzter Metallbänder oder Folien ein wesentlich engeres Toleranzfeld für die Spaltweite eingeführt werden, als dies durch die nach dem Stand der Technik vorgesehene, spanende Einzelfertigung von Siebrad einerseits und Zwischenelementen andererseits möglich wäre. Während sich die Toleranzen bei einzeln gefertigten Komponenten in der oben beschriebenen, ungünstigen Weise summieren könnten, so dass direkte Einflüsse auf die Funktion der Filtriervorrichtung entstehen können, ist das Toleranzfeld bei gewalzten Metallfolien oder Metallbändern wesentlich kleiner.

Ein weiterer Vorteil einer Metallfolie, insbesondere Edelstahlfolie, als Spaltweitenanpassungsschicht liegt darin, dass mit einer sehr glatten und im Vergleich zu den benachbarten Elementen härteren Metallfolie, die zwischen die mitunter raueren Oberflächen an den Kontaktflächen der Gehäuseplatten eingefügt ist, die Setzkraftverluste geringer sind, als wenn die raueren Gehäuseplatten direkt aneinander liegen würden.

Der Vorteil der Verwendung von Metallbändern liegt darin, dass sie nur abgelängt werden müssen, um wenigstens eine der Seitenflächen des Zwischenelements zumindest teilweise zu belegen. Dabei werden vorzugsweise nur etwa 80% - 90% der Fläche mit Metallbandabschnitten belegt, so dass dazwischen Leerräume verbleiben. Da ja im verspannten Zustand des Gehäuses auch das Metallband komprimiert wird, ändern sich dessen Dimensionen, darunter auch die seitliche Ausdehnung in der Fläche der Trennebene. In der Kontaktfläche eingeschlossene Luft kann außerdem problemlos über die nicht bedeckten Flächenbereiche entweichen.

Ein besonderer Vorteil ergibt sich durch Verwendung einer verdrängbaren, nicht-korrosiven Flüssigkeit als Montagehilfe. Die Innenflächen von Einlaufplatte und/oder Auslaufplatte werden damit benetzt, und zwar zumindest dort, wo die Spaltanpassungselemente aufgelegt werden sollen, um die Spaltanpassungsschicht zu bilden. Die Flüssigkeit bewirkt eine gute Haftung, so dass die sehr dünnen und damit sehr leichten Folienabschnitte bzw. Metallbandabschnitte nicht durch Luftbewegungen um die Werkstücke herum oder durch leichte Bewegungen der Werkstücke selbst von ihrer Position wegbewegt werden. Die Flüssigkeit wird später beim Aufbringen der Vorspannung am Gehäuse wieder vollständig verdrängt, so dass sie seitlich austritt und sich allenfalls in den Spalten zwischen nebeneinanderliegenden Elementen der Spaltanpassungsschicht ansammelt, aber ohne Einfluss auf die Spaltweite bleibt. Es können auch gelartige Haftmittel eingesetzt werden, nur sollten darin keine Festkörper als Füllstoffe vorhanden sein, um die Maßhaltigkeit nicht zu beeinflussen.

Um Kaltverschweißungen der Gehäuseelemente mit den Elementen in der Spaltweitenanpassungsschicht zu vermeiden, ist es vorteilhaft, die Kontaktflächen des Gehäuses mit nitrierten Oberflächen zu versehen.

Die Spaltweitenanpassungsschicht muss nicht aus einer einzelnen Lage eines Werkstoffs bestehen, sondern kann z. B. auch aus übereinanderliegenden Folien gebildet werden. Weiterhin können auch beidseits an den Zwischenplatten Spaltweitenanpassungsschichten eingefügt werden.

Die Erfindung wird nachfolgend mit Bezug auf die Zeichnung näher erläutert. Die Figuren zeigen im Einzelnen:
- Fig. 1: eine Draufsicht auf eine Zwischenebene in der Filtriervorrichtung;
- Fig. 2: eine schematische horizontale Schnittansicht durch einen Seitenbereich der Filtriervorrichtung;
- Fig. 3a - 3d: Elemente einer Innenpaarung mit Toleranzfeldern nach dem Stand der Technik, jeweils in schematischer Ansicht;
- Fig. 4a - 4d: Elemente einer Innenpaarung mit Toleranzfeldern nach der Erfindung, jeweils in schematischer Ansicht;

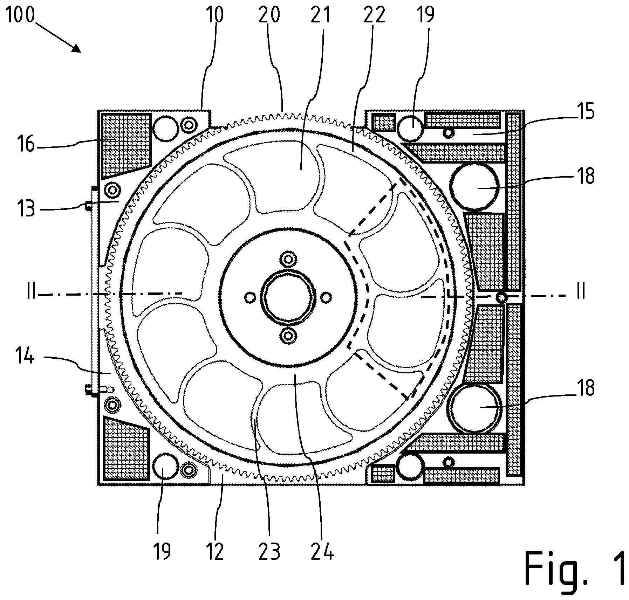

Figur 1 zeigt Teile einer Siebrad-Filtriervorrichtung 100 in Draufsicht auf eine Zwischenebene. Abgenommen von einem Gehäuse 10 ist hierbei eine Einlaufplatte, über welche das Fluid zu Siebstellen 21 auf einem rotierbaren Siebrad 20 geleitet wird. Im Hintergrund ist eine Auslaufplatte 12 angeordnet, über welche das Fluid von der jeweiligen Siebstelle 21 nach außen weggeleitet wird.

Die Siebstellen 21 sind jeweils durch eine innere, ringförmige Dichtfläche 24 und eine äußere, ringförmige Dichtfläche 22 sowie durch Stege 23 begrenzt, welche sich zwischen der inneren Dichtfläche 24 und der äußeren Dichtfläche 22 erstrecken.

Das Siebrad 20 ist von zwei kleineren Zwischenplatten 13, 14 links und einer größeren Zwischenplatte 15 rechts eingerahmt. Im Bereich der Zwischenplatte 15 befindet sich der durch die gestrichelte Linie auf dem Siebrad 20 angedeutete, durchströmte und somit druckbeaufschlagte Bereich.

Die Zwischenplatten 13, 14, 15 wirken als Distanzelemente zwischen der Einlaufplatte und der Auslaufplatte 12. Die mit der gestrichelten Linie eingerahmten Bereiche der Siebstellen 21 sind im Produktionsbetrieb durchströmt, so dass das Gehäuse 10 in diesem Bereich direkt durch den Fließinnendruck belastet wird. Dort sind große Durchgangsbohrungen 18 vorgesehen, an denen Spannbolzen durch das ganze Paket von Gehäuseteilen hindurch zu stecken und zu verspannen sind. Zusätzlich sind um das Siebrad 20 herum mehrere kleine Durchgangsbohrungen 19 für die Verschraubungen am Gehäuse 10 angeordnet. Die in Fig. 1 nach vorn weisende Kontaktfläche ist mit mehreren Metallfolienabschnitten 16 belegt, welche eine Spaltweitenanpassungsschicht bilden.

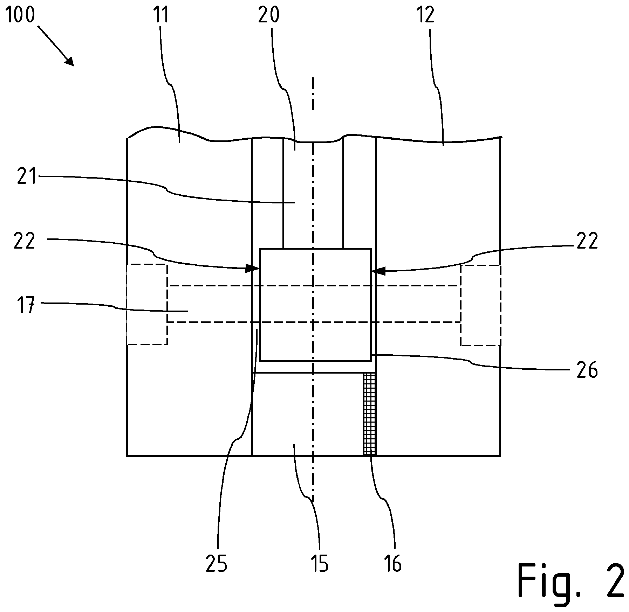

Figur 2 zeigt eine schematische Schnittdarstellung gemäß der Linie II-II auf halber Höhe in Figur 1. Links befindet sich die Einlaufplatte 11; rechts die Gehäuseauslaufplatte 12. Diese werden durch die dazwischen eingefügte Zwischenplatte 15 und die Spaltweitenanpassungsschicht 16 auf Distanz gehalten, und zwar auf eine Distanz, die der Höhe des Siebrads 20 zuzüglich der doppelten Schmierspaltweite zwischen Siebrad 20 und Ein- bzw. Auslaufplatte entspricht.

Das Siebrad 20 ist im Außenbereich etwas schmaler, so dass sich zwischen den äußeren Dichtflächen 24 an den beiden Stirnseiten des Siebrads 20 und den Innenflächen von Ein- bzw. Auslaufplatte 11, 12 jeweils ein Spalt 25, 26 mit einer Schmierspaltweite Δs ergibt. Oberhalb davon, im Bereich der Siebstelle 21, ist das Siebrad 20 schmaler. Für die vorliegende Erfindung ist allein der Bereich der engen Schmierspalte 25, 26 wichtig, die dem mittel- bis hochviskosen Fluid einen ausreichend hohen Fließwiderstand entgegenzusetzen haben, um zu große Leckageströmungen zu verhindern.

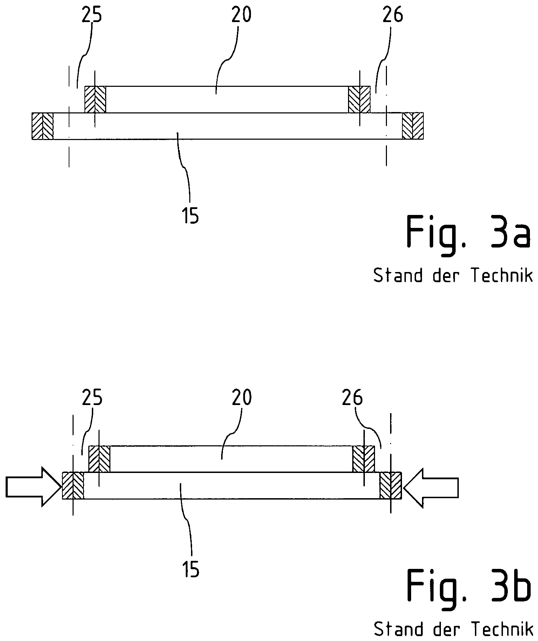

Die der Erfindung zugrundeliegende Problematik nach dem Stand der Technik wird anhand der Figuren 3a bis 3d erläutert:
Die Figuren 3a bis 3d zeigen jeweils schematisch die Höhe bzw. Schichtdicke eines Zwischenelements 15 und eines Siebrads 20 gemäß dem Stand der Technik. Die tatsächlichen Höhen der Bauteile besitzen jeweils Toleranzen, die durch die schraffierten Flächen in den seitlichen Endbereichen dargestellt sind. Die Weite der Toleranzfelder ist hauptsächlich von dem verwendeten Fertigungsverfahren abhängig.

In Figur 3a sind die Ausgangsgeometrien angedeutet, bevor die durch die Blockpfeile angedeutete Vorspannung aufgebracht wird. Die äußeren strichpunktierten Linien kennzeichnen die seitliche Begrenzung der rechnerisch vorgesehenen Nenn-Distanz zwischen den Ein- und Auslaufplatten 11, 12. Hier schließen sich nach innen die gewünschten Spalte 25, 26 an.

Figur 3b zeigt den schematischen Zustand nach der Kompression des Zwischenelements 15 durch Aufbringen der Vorspannung, welche durch die Blockpfeile angedeutet ist. Das Siebrad 20 wurde nicht komprimiert und ist daher unverändert. Die Zwischenplatte 15 des Gehäuses 10 hingegen wurde soweit komprimiert, dass die gewünschte Nenn-Spaltweite der Spalte 25, 26 erreicht werden kann. Die Distanz zwischen den jeweiligen Mitten der Toleranzfelder an der Zwischenplatte 15 stimmt mit der Nenn-Distanz überein. Die rechnerisch bestimmten Spaltweiten würden aber nur dann erreicht, wenn die Ist-Höhen der Elemente 15, 20 zufällig mit den Soll-Höhen übereinstimmten. Tatsächlich sind die Höhen jedoch für jedes der Elemente 15, 20 einzeln toleranzbehaftet.

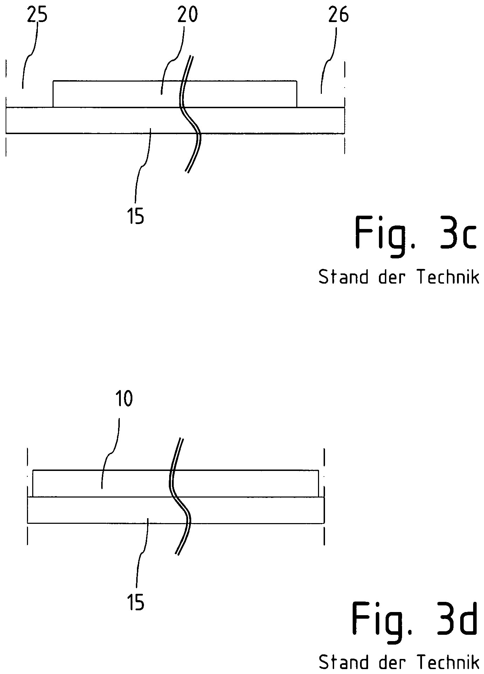

Figur 3c zeigt das Beispiel einer ungünstigen Paarung, bei der eine Zwischenplatte 15 mit maximaler Höhe mit einem Siebrad 20 mit minimaler Höhe kombiniert ist. Die Spaltweite der Spalte 25, 26 beträgt wesentlich mehr als die gewünschte Spaltweite. Es kann zu größeren Leckströmungen kommen.

Figur 3d zeigt das Beispiel einer weiteren ungünstigen Paarung, bei der eine Zwischenplatte 15 mit minimaler Höhe mit einem Siebrad 20 mit maximaler Höhe kombiniert ist. Spalte 25, 26 sind hier kaum noch vorhanden, so dass das Siebrad geklemmt wird und nicht oder nur extrem schwergängig drehbar ist Die Vorspannung müsste also reduziert werden, mit der Gefahr der Undichtigkeit bei Auftreten eines höheren Innendrucks, weil dann die Schraubenvorspannung möglicherweise nicht mehr alle Schichten des Gehäuses dicht aneinander halten kann.

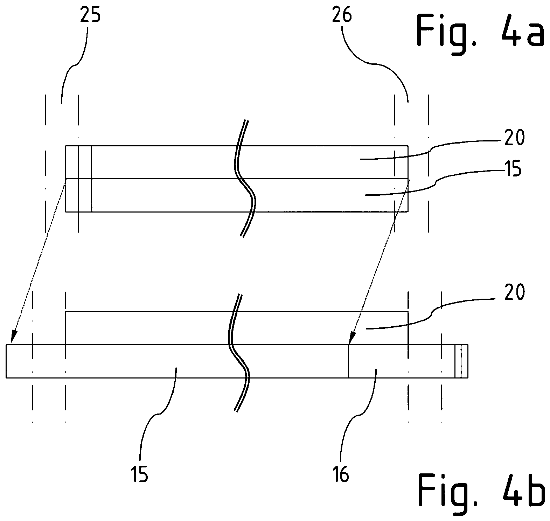

Figur 4a zeigt in der gleichen schematischen Darstellungsweise wie in den Fig. 3a -3d ein Siebrad 20 und eine Zwischenplatte 15, wie sie nach der Erfindung vorgesehen sind. Beide Teile 15, 20 sind in derselben Aufspannung gefertigt und besitzen daher eine identische Höhe bzw. Schichtdicke und gleich große Toleranzfelder.

In Fig. 4b ist die Zwischenplatte 15 schematisch seitlich zu einer Gehäuseinnenfläche verschoben worden, um sich an die angrenzende Ein- oder Auslaufplatte anzulegen. Ergänzt worden ist die Zwischenplatte 15 durch eine Spaltweitenanpassungsschicht 16. Diese weist ein im Vergleich zum Stand der Technik sehr viel engeres Toleranzfeld auf, das an deren rechtem Rand angedeutet ist. Die jeweiligen äußeren strichpunktierten Linien kennzeichnen die Lage der Innenflächen der angrenzenden Ein- und Auslaufplatten nach Aufbringen der Vorspannung und damit die außenseitige Begrenzung für die Schmierspalte 25, 26.

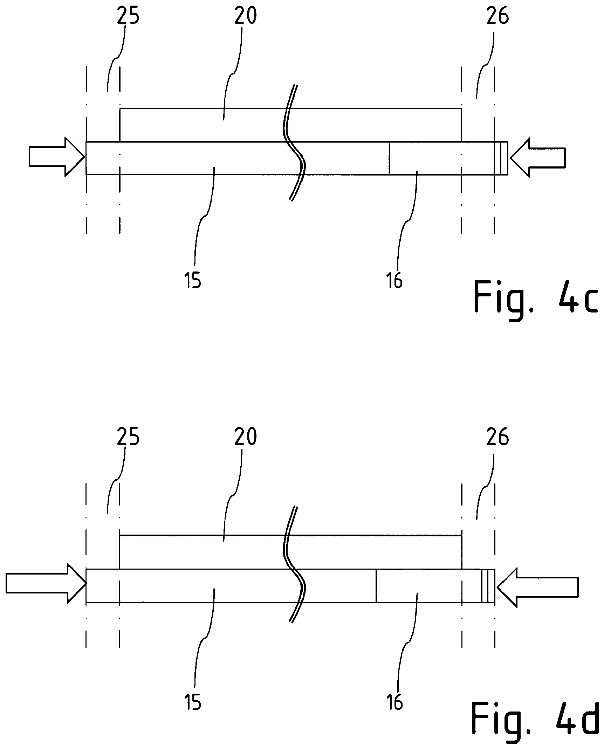

Nach Aufbringen der für den Betriebsdruck pₘₐₓ rechnerisch notwendigen Vorspannung an den Gehäuseplatten stellen sich die Höhenverhältnisse gemäß Fig. 4c ein. Dabei werden fast die gewünschten Spaltweiten der Spalte 25, 26 erreicht. Allerdings sind die Höhe der Spaltweitenanpassungsschicht 16 und die Vorspannung so gewählt, dass zusätzlich nachgespannt werden kann. Selbst wenn die Ist-Höhe in der Spaltweitenanpassungsschicht 16 an der unteren Grenze des Toleranzfelds liegen sollte wie in Figur 4c dargestellt, liegt somit eine dichte und für den Betriebsdruck pₘₐₓ stets ausreichend vorgespannte Verbindung vor.

Sollte die Ist-Höhe in der Spaltweitenanpassungsschicht 16 hingegen an der oberen Grenze des Toleranzfelds liegen, und die Spaltweite der Spalte 25, 26 somit etwas zu groß sein, dann kann durch eine weitere Erhöhung der Vorspannung, welche in Fig. 4d durch verlängerte Blockpfeile angedeutet ist, die Kompression erhöht und damit die Höhe soweit reduziert werden, dass die gewünschten Nenn-Maße erreicht werden, wie in Figur 4d dargestellt.

## Patentansprüche

1. Siebrad-Filtriervorrichtung (100) für mittel- bis hochviskose Fluide, die ein in einem Gehäuse (10) drehbar gelagertes Siebrad (20) mit wenigstens einem durchströmbaren Siebelement (21) umfasst,
wobei das Gehäuse (10) wenigstens umfasst:
- eine Einlaufplatte (11) mit wenigstens einem Einlaufkanal,
- wenigstens eine Zwischenplatte (13, 14, 15) und
- eine Auslaufplatte (12) mit einem Auslaufkanal,
welche Platten (11, ..., 15) über mehrere, sich durch das Paket der aneinander liegenden Platten (11, ..., 15) erstreckende Schraubbolzen (17) miteinander verschraubt sind, welche Schraubbolzen (17) derart vorgespannt sind, dass alle Platten (11, ..., 15) bis zu einem maximal zulässigen Betriebsdruck pₘₐₓ fest aneinander liegen;
wobei jeweils zwischen einer Innenfläche der Einlaufplatte (11) bzw. einer Innenfläche der Auslaufplatte (12) und einer Dichtfläche (22, 23, 24) des Siebrads (20) ein Schmierspalt (25, 26) ausgebildet ist,
**dadurch gekennzeichnet,**
- **dass** das Siebrad (20) im Bereich seiner Dichtflächen (22, 23, 24) eine identische Höhe wie die wenigstens eine Zwischenplatte (13, 14, 15) hat, und
- **dass** zwischen der Einlaufplatte (11) und der wenigstens einen Zwischenplatte (13, 14, 15) und/oder zwischen der Auslaufplatte (12) und der wenigstens einen Zwischenplatte (13, 14, 15) eine Spaltweitenanpassungsschicht (16) eingefügt ist.

2. Siebrad-Filtriervorrichtung (100) nach Anspruch 1, **dadurch gekennzeichnet, dass** die Spaltweitenanpassungsschicht (16) durch eine Metallfolie gebildet ist.

3. Siebrad-Filtriervorrichtung (100) nach Anspruch 2, **dadurch gekennzeichnet, dass** die Spaltweitenanpassungsschicht (16) durch eine kaltgewalzte Edelstahlfolie gebildet ist.

4. Siebrad-Filtriervorrichtung (100) nach Anspruch 2 oder 3, **dadurch gekennzeichnet, dass** die Spaltweitenanpassungsschicht (16) durch mehrere nebeneinander positionierte Metallfolienabschnitte gebildet ist, die um die Durchgangsbohrungen (18, 19) herum angeordnet sind.

5. Siebrad-Filtriervorrichtung (100) nach einem der Ansprüche 2 bis 4,
**dadurch gekennzeichnet, dass** die Metallfolienabschnitte mittels eines nicht-korrosiven Haftmittels auf einer Kontaktfläche an der Ein- bzw. Auslaufplatte (11, 12) oder auf der wenigstens einen Zwischenplatte (13, 14, 15) anhaften.

6. Abdicht- und Montageverfahren für eine Siebrad-Filtriervorrichtung (100) für mittel- bis hochviskose Fluide,
die ein in einem Gehäuse (10) drehbar gelagertes Siebrad (20) mit wenigstens einer Siebstelle (21) umfasst,
wobei das Gehäuse eine Einlaufplatte (11) mit wenigstens einem Einlaufkanal, wenigstens eine Zwischenplatte (13, 14, 15) und eine Auslaufplatte (12) mit wenigstens einem Auslaufkanal umfasst,
wobei die Platten (11, 12, 13, 14, 15) über mehrere, sich durch das Paket der aneinander liegenden Platten (11, 12, 13, 14, 15) erstreckende Schraubbolzen (17) miteinander verschraubt werden und für die Schraubbolzen (17) eine solche Vorspannung gewählt wird, dass bis zu einem maximal zulässigen Betriebsdruck pₘₐₓ alle Platten (11, 12, 13, 14, 15) dicht aneinander liegen;
**gekennzeichnet durch** folgende Verfahrensschritte:
- die wenigstens eine Zwischenplatte (13, 14, 15) und das Siebrad (20) in Bezug auf seine Dichtflächen (22, 23, 24) werden mit identischer Höhe gefertigt;
- zwischen der Ein- bzw. Auslaufplatte (11, 12) und der wenigstens einen Zwischenplatte (13, 14, 15) wird jeweils eine Spaltweitenanpassungsschicht (16) eingefügt, wobei die Stärke der Spaltweitenanpassungsschicht (16) entsprechend der elastischen Verformung der Platten (11, 12, 13, 14, 15) bei der gewählten Vorspannung zuzüglich einer Schmierspaltweite in den Spalten (25, 26) zwischen den Innenflächen an Ein- bzw. Auslaufplatte (11, 12) und den Dichtflächen (22, 23, 24) am Siebrad (20) gewählt wird;

7. Abdicht- und Montageverfahren nach Anspruch 6, **dadurch gekennzeichnet, dass** die Spaltweitenanpassungsschicht (16) durch eine Metallfolie gebildet ist.

8. Abdicht- und Montageverfahren nach Anspruch 7, **dadurch gekennzeichnet, dass** die Spaltweitenanpassungsschicht (16) durch eine kaltgewalzte Stahlfolie gebildet ist.

9. Abdicht- und Montageverfahren nach Anspruch 7 oder 8, **dadurch gekennzeichnet, dass** die Spaltweitenanpassungsschicht (16) durch mehrere Metallfolienabschnitte gebildet ist, die um die Schraubbolzen (17) herum angeordnet sind.

10. Abdicht- und Montageverfahren nach einem der Ansprüche 7 bis 9,
**dadurch gekennzeichnet, dass** die als Spaltweitenanpassungsschicht (16) dienende Metallfolie vor der Verschraubung mit einer nicht-korrosiven, verdrängbaren Flüssigkeit auf den Platten (11, 12, 13, 14, 15) fixiert wird.

## Claims

1. Screen wheel filtering apparatus (100) for medium-to high-viscosity fluids, comprising a screen wheel (20) which is rotatably mounted in a housing (10) and which has at least one screen element (21) through which flow is able to pass,
wherein the housing (10) comprises at least:
- an inflow plate (11) with at least one inflow channel,
- at least one intermediate plate (13, 14, 15), and
- an outflow plate (12) with an outflow channel, which plates (11,...,15) are screwed to one another via multiple extending through the set of mutually abutting plates (11,...,15), which threaded bolts (17) are pre-tensioned such that, up to a maximum permissible operating pressure pₘₐₓ, all the plates (11,...,15) firmly abut against one another;
wherein a lubrication gap (25, 26) is formed in each case between an inner surface of the inflow plate (11) and/or of the outflow plate (12) and a sealing surface (22, 23, 24) of the screen wheel (20),
**characterized**
- **in that**, in the region of its sealing surfaces (22, 23, 24), the screen wheel (20) has an identical height to the at least one intermediate plate (13, 14, 15), and
- **in that** a gap width adaptation layer (16) is inserted between the inflow plate (11) and the at least one intermediate plate (13, 14, 15) and/or between the outflow plate (12) and the at least one intermediate plate (13, 14, 15).

2. Screen wheel filtering apparatus (100) according to Claim 1, **characterized in that** the gap width adaptation layer (16) is formed by a metal foil.

3. Screen wheel filtering apparatus (100) according to Claim 2, **characterized in that** the gap width adaptation layer (16) is formed by a cold-rolled high-grade steel foil.

4. Screen wheel filtering apparatus (100) according to Claim 2 or 3, **characterized in that** the gap width adaptation layer (16) is formed by multiple adjacently positioned metal foil sections which are arranged around the passage bores (18, 19).

5. Screen wheel filtering apparatus (100) according to one of Claims 2 to 4, **characterized in that**, by means of a non-corrosive bonding agent, the metal foil sections adhere to a contact surface on the inflow and/or outflow plate (11, 12) or on the at least one intermediate plate (13, 14, 15).

6. Sealing and mounting method for a screen wheel filtering apparatus (100) for medium- to high-viscosity fluids,
comprising a screen wheel (20) which is rotatably mounted in a housing (10) and which has at least one screening point (21),
wherein the housing comprises an inflow plate (11) with at least one inflow channel, at least one intermediate plate (13, 14, 15), and an outflow plate (12) with at least one outflow channel, wherein the plates (11, 12, 13, 14, 15) are screwed to one another via multiple threaded bolts (17) extending through the set of mutually abutting plates (11, 12, 13, 14, 15), and, for the threaded bolts (17), a pre-tension is selected such that, up to a maximum permissible operating pressure pₘₐₓ, all the plates (11, 12, 13, 14, 15) sealingly abut against one another;
**characterized by** the following method steps:
- the at least one intermediate plate (13, 14, 15) and the screen wheel (20), with respect to the sealing surfaces (22, 23, 24) of the latter, are manufactured with identical height;
- a gap width adaptation layer (16) is inserted in each case between the inflow and/or outflow plate (11, 12) and the at least one intermediate plate (13, 14, 15), wherein the thickness of the gap width adaptation layer (16) is selected according to the elastic deformation of the plates (11, 12, 13, 14, 15) for the selected pre-tension plus a lubrication gap width in the gaps (25, 26) between the inner surfaces on the inflow and/or outflow plate (11, 12) and the sealing surfaces (22, 23, 24) on the screen wheel (20).

7. Sealing and mounting method according to Claim 6, **characterized in that** the gap width adaptation layer (16) is formed by a metal foil.

8. Sealing and mounting method according to Claim 7, **characterized in that** the gap width adaptation layer (16) is formed by a cold-rolled steel foil.

9. Sealing and mounting method according to Claim 7 or 8, **characterized in that** the gap width adaptation layer (16) is formed by multiple metal foil sections which are arranged around the threaded bolts (17).

10. Sealing and mounting method according to one of Claims 7 to 9, **characterized in that**, prior to the screwing process, the metal foil serving as a gap width adaptation layer (16) is fixed on the plates (11, 12, 13, 14, 15) by way of a non-corrosive, displaceable liquid.

## Revendications

1. Dispositif de filtration à roue de tamisage (100) destiné à des fluides de viscosité moyenne à élevée et comprenant une roue de tamisage (20) montée à rotation dans un boîtier (10) et pourvue d'au moins un élément de tamisage (21) pouvant être traversé par un écoulement,
le boîtier (10) comprenant au moins :
- une plaque d'entrée (11) pourvue d'au moins un canal d'entrée,
- au moins une plaque intermédiaire (13, 14, 15) et
- une plaque de sortie (12) pourvue d'un canal de sortie,
lesquelles plaques (11, ..., 15) sont vissées les unes aux autres par le biais d'une pluralité de qui s'étendent à travers le paquet de plaques (11, ..., 15) en appui les unes sur les autres, lesquels boulons filetés (17) sont précontraints de telle sorte que toutes les plaques (11, ..., 15) soient en appui de manière fixe les unes sur les autres jusqu'à atteindre une pression de service maximale admissible pₘₐₓ ;
un interstice de lubrification (25, 26) étant ménagé entre une surface intérieure de la plaque d'entrée (11) ou une surface intérieure de la plaque de sortie (12) et une surface d'étanchéité (22, 23, 24) de la roue de tamisage (20),
**caractérisé en ce que**
- la roue de tamisage (20) a au niveau de ses surfaces d'étanchéité (22, 23, 24) une hauteur identique à celle de l'au moins une plaque intermédiaire (13, 14, 15), et
- une couche d'adaptation de largeur d'interstice (16) est insérée entre la plaque d'entrée (11) et l'au moins une plaque intermédiaire (13, 14, 15) et/ou entre la plaque de sortie (12) et l'au moins une plaque intermédiaire (13, 14, 15).

2. Dispositif de filtration à roue de tamisage (100) selon la revendication 1, **caractérisé en ce que** la couche d'adaptation de largeur d'interstice (16) est formée par une feuille métallique.

3. Dispositif de filtration à roue de tamisage (100) selon la revendication 2, **caractérisé en ce que** la couche d'adaptation de largeur d'interstice (16) est formée par une feuille d'acier fin laminée à froid.

4. Dispositif de filtration à roue de tamisage (100) selon la revendication 2 ou 3, **caractérisé en ce que** la couche d'adaptation de largeur d'interstice (16) est formée par une pluralité de portions de feuille métallique positionnées les unes à côté des autres et disposées autour des alésages traversants (18, 19).

5. Dispositif de filtration à roue de tamisage (100) selon l'une des revendications 2 à 4, **caractérisé en ce que** les portions de feuille métallique adhèrent à une surface de contact sur la plaque d'entrée ou de sortie (11, 12) ou sur l'au moins une plaque intermédiaire (13, 14, 15) au moyen d'un adhésif non corrosif.

6. Procédé d'étanchéité et de montage d'un dispositif de filtration à roue de tamisage (100) destiné à des fluides de moyenne à haute viscosité et comprenant une roue de tamisage (20) montée à rotation dans un boîtier (10) et pourvue d'au moins un emplacement de tamisage (21),
le boîtier comprenant une plaque d'entrée (11) pourvue d'au moins un canal d'entrée, au moins une plaque intermédiaire (13, 14, 15) et une plaque de sortie (12) pourvue d'au moins un canal de sortie,
les plaques (11, 12, 13, 14, 15) étant vissées les unes aux autres par le biais d'une pluralité de boulons filetés (17) qui s'étendent à travers le paquet de plaques (11, 12, 13, 14, 15) en appui les unes sur les autres et une précontrainte est choisie pour les boulons filetés (17) de telle sorte que toutes les plaques (11, 12, 13, 14, 15) soient en appui étanche les unes sur les autres jusqu'à atteindre une pression de service maximale admissible pₘₐₓ ;
**caractérisé par** les étapes de procédé suivantes :
- l'au moins une plaque intermédiaire (13, 14, 15) et la roue de tamisage (20), en ce qui concerne ses surfaces d'étanchéité (22, 23, 24), sont fabriquées avec une hauteur identique ;
- une couche d'adaptation de largeur d'interstice (16) est insérée entre la plaque d'entrée ou de sortie (11, 12) et l'au moins une plaque intermédiaire (13, 14, 15), l'épaisseur de la couche d'adaptation de largeur d'interstice (16) est choisie de façon à correspondre à la déformation élastique des plaques (11, 12, 13, 14, 15) lors de la précontrainte choisie et en plus à une largeur d'interstice de lubrification dans les interstices (25, 26) ménagés entre les surfaces intérieures au niveau des plaques d'entrée et de sortie (11, 12) et les surfaces d'étanchéité (22, 23, 24) au niveau de la roue de tamisage (20).

7. Procédé d'étanchéité et de montage selon la revendication 6, **caractérisé en ce que** la couche d'adaptation de largeur d'interstice (16) est formée par une feuille métallique.

8. Procédé d'étanchéité et de montage selon la revendication 7, **caractérisé en ce que** la couche d'adaptation de largeur d'interstice (16) est formée par une feuille d'acier laminée à froid.

9. Procédé d'étanchéité et de montage selon la revendication 7 ou 8, **caractérisé en ce que** la couche d'adaptation de largeur d'interstice (16) est formée par une pluralité de portions de feuille métallique qui sont disposées autour des boulons filetés (17).

10. Procédé d'étanchéité et de montage selon l'une des revendications 7 à 9, **caractérisé en ce que** la feuille métallique servant de couche d'adaptation de largeur d'interstice (16) est fixée avant vissage sur les plaques (11, 12, 13, 14, 15) avec un liquide non corrosif déplaçable.
